# EUROPÄISCHE PATENTSCHRIFT

(11) **EP 1 925 826 B1**
(45) Veröffentlichungstag und Bekanntmachung des Hinweises auf die Patenterteilung: **22.12.2010**
(21) Anmeldenummer: 07021675.9
(22) Anmeldetag: 08.11.2007
(51) Int. Cl.: F15B 15/14

(54) **Hydraulikzylinder**
Hydraulic cylinder
Vérin hydraulique

(30) Priorität: 21.11.2006 DE 102006055225
(43) Veröffentlichungstag der Anmeldung: 28.05.2008
(73) Patentinhaber: ZF Friedrichshafen AG, 88038 Friedrichshafen (DE)
(72) Erfinder: Tulaczko, Boleslaw, 97453 Schonungen/Hausen (DE); Rieß, Thomas, 97437 Haßfurt (DE); Gebauer, Dieter, 97502 Euerbach (DE); Wegner-Braun, Holger, 97505 Geldersheim (DE)

(56) Entgegenhaltungen:
- DE-A1- 10 214 599
- DE-C1- 19 629 348

## Beschreibung

Die Erfindung betrifft einen Hydraulikzylinder gemäß dem Oberbegriff des Patentanspruchs 1.

Ein gattungsgemäßer Zylinder wird z.B. in der DE 102 14 599 A1 offenbart und findet Verwendung als Stellzylinder eines hydraulischen Kupplungs- oder Bremssystems an Fahrzeugen. Bei einem solchen System stehen gewöhnlich zwei Hydraulikzylinder, von denen einer als Geber- und der zweite als Nehmerzylinder arbeitet, über Druckmittelanschlüsse und über eine diese verbindende Hydraulikleitung miteinander in Fluidverbindung und bilden so einen gemeinsamen Druckraum aus.

Es besteht beim Zusammenbau eines derartigen Hydrauliksystems das Problem, dass innerhalb des Druckraums Fremdpartikel dauerhaft eingeschlossen werden können. Bei diesen Fremdpartikeln kann es sich beispielsweise um Späne oder Abriebe handeln, welche den Einzelkomponenten noch von deren Herstellung fertigungsbedingt anhaften können. Für die Betriebssicherheit eines Hydrauliksystems bzw. Hydraullikzylinders sind insbesondere metallische oder oxidische Rückstände, z.B. Stäube und Späne von Bedeutung, da diese in den, wenn auch äußerst schmalen, Ringspalt zwischen die Laufbuchse und die Kolbenlauffläche eindringen und somit die sensiblen und hochgenau gefertigten Laufbuchsen und Kolbenlaufflächen beschädigen können. Als Folge davon können sich im Lebensdauerverlauf die Lauf- und Dichteigenschaften der Hydraulikzylinder verschlechtern und Undichtigkeiten in einem hydraulischen System hervorgerufen werden, was einen frühen Ausfall eines hydraulischen Brems- oder Kupplungssystems bewirken und somit die Fahrsicherheit in einem ungünstigen Maße erheblich beeinflussen kann.

Von dem erläuterten Problem ausgehend, stellt sich die Erfindung die Aufgabe, einen Hydraulikzylinder bereitzustellen, der gegenüber im Druckraum befindlichen Fremdpartikeln innerhalb einer bestimmten Größenordnung unempfindlicher ist und dessen Betriebssicherheit selbst bei der Anwesenheit von solchen Fremdpartikeln über eine vorbestimmte Lebensdauer gewährleistet ist.

Das genannte Problem wird bei einem gattungsgemäßen Hydraulikzylinder durch die im Kennzeichen von Patentanspruch 1 genannten Merkmale gelöst.

Der Erfindung geht von der Überlegung aus, die am Kolben vorhandene Lauffläche lediglich zur Führung des Kolbens ausserhalb des Druckraums und zur Abdichtung des Druckraums heranzuziehen, nicht jedoch gleichzeitig auch zur Kolbenführung innerhalb des Druckraumes. Es wird somit vorgeschlagen, dass ein innerhalb des Druckraumes am Gehäuse ausgebildeter zylindrischer Wandungsbereich mit einem gegenüber einem außerhalb des Druckraumes angeordneten äußeren Laufbuchsenabschnitt der Laufbuchse größeren Innendurchmesser ausgeführt ist.

Durch diese Ausgestaltung eines Hydraulikzylinders können für den im Druckraum befindlichen Teil des Kolbens die beiden Funktionen Kolbenführung und Abdichtung des Druckraums voneinander separiert werden. Die am Kolben ausgebildete erste Lauffläche wirkt mit der gehäusefesten Dichtung zur Abdichtung des Hydraulikzylinders zusammen und stellt mit dem außerhalb des Druckraumes angeordneten äußeren Laufbuchsenabschnitt die Kolbenführung sicher. Im Druckraum wird somit zwischen der Lauffläche des Kolbens und dem dort diesem radial gegenüberliegenden zylindrischen Wandungsbereich ein Ringraum geschaffen, der sich axial von dem druckraumseitigen Ende des Kolbens bis zur Dichtung erstrecken kann. Dieser Ringraum ist in radialer Richtung so dimensioniert, dass sich innerhalb des Druckraumes befindliche Fremdpartikel in diesem frei bewegen können und sich nicht zwischen der ersten Lauffläche und der zylindrischen Wandungsfläche verklemmen können. Die am Gehäuse angeordnete Dichtung liegt kolbenseitig dichtend, d.h. spaltfrei an, so dass dort ggf. auftretende Fremdpartikel bei einer Bewegung des Kolbens sicher von diesem abgestreift werden können. Es hat sich gezeigt, dass eine radiale Ausdehnung des Ringraumes im Bereich von etwa 0,2- 0,5mm den Anforderungen genügt.

Vorteilhafte Weiterbildungen und Ausgestaltungen der Erfindung sind in den abhängigen Ansprüchen angegeben.

Gemäß der Ansprüche 2-4 ist es bei dem Hydraulikzylinder vorteilhaft, für den Kolben auch innerhalb des Druckraumes eine Führung vorzusehen, so dass dieser über einen vollständige Hubbewegung sicher axial geführt werden und dass sich dieser nicht infolge von Querkräften innerhalb dessen Laufbuchse verklemmen kann. Dazu wird gemäß Anspruch 2 vorgeschlagen, an dem Kolben eine zweite, sich von der ersten unterscheidende Lauffläche als Führungsabschnitt auszubilden, die mit einem im Druckraum gehäusefest ausgebildeten Führungsmittel zusammenwirken kann.

Mit besonderen Vorteil kann nach Anspruch 3 zur Realisierung einer druckraumseitigen Kolbenführung die zweite Lauffläche des Kolbens gegenüber der ersten Lauffläche radial erweitert ausgebildet werden, wobei der zylindrische Wandungsbereich am Gehäuse als ein im Druckraum befindlicher innerer Laufbuchsenabschnitt zum Zusammenwirken mit der zweiten Lauffläche ausgebildet ist. Das bedeutet, dass das oben erwähnten Führungsmittel in diesem Fall durch den zylindrischen Wandungsbereich im Druckraum bereitgestellt werden.

Das Eintreten von Fremdpartikeln in den radial zwischen der zweiten Lauffläche, d.h. dem Führungsabschnitt und dem zylindrischen Wandungsbereich verbleibenden Spalt ist wenig kritisch, da selbst bei einer dadurch begünstigten Beschädigung der Flächen die Führung des Kolbens kaum beeinflusst wird.

Alternativ kann die zweite Lauffläche des Kolbens auch an diesem stirnseitig oder im inneren des Kolbens vorgesehen sein und mit einem am Gehäuseboden angeordneten Führungsmittel, bspw. einer Hülse oder einer Stange, zusammenwirken.

Günstigerweise ist nach Anspruch 4 die zweite Lauffläche an dem, dem Druckraum zugewandten Endbereich des Kolbens ausgebildet.

Bevorzugt kann die zweite Lauffläche als Scheibe axial sehr kurz oder als Ringkragen mit einer Länge von wenigen Millimetern, z.B. 3 - 5mm, und in Umfangsrichtung geschlossen oder in Form einzelner am Umfang beabstandeter Segmente am Kolben ausgeführt sein. Auf diese Weise können Fremdpartikel ungehindert in den Ringraum ein- und auch wieder austreten.

Es ist ferner gemäß Anspruch 5 zweckdienlich, in einer druckraummaximierten Endstellung des Kolbens einen axialen Freiraum zwischen der zweiten Lauffläche des Kolbens und der am Gehäuse angeordneten Dichtung auszubilden. Ein solcher Freiraum bietet für die dort befindlichen Fremdpartikel auch in der ausgefahrenen Endstellung des Kolbens ein ausreichend großes Volumen, ohne dass diese vor der Dichtung komprimiert und an diese angepresst werden.

Nachfolgend wird die Erfindung unter Bezugnahme auf die beigefügte Zeichnung beispielhaft erläutert. Es zeigen:
Fig. 1 einen Hydraulikzylinder mit einer geteilten und mit unterschiedlichen Durchmessern ausgeführten Laufbuchse, wobei innerhalb des Druckraumes zwischen der Lauffläche des Kolbens und dem dort befindlichen Abschnitt der Laufbuchse ein Ringraum ausgebildet ist;
Fig. 2 einen vergrößerten Ausschnitt eines Details von Fig. 1.

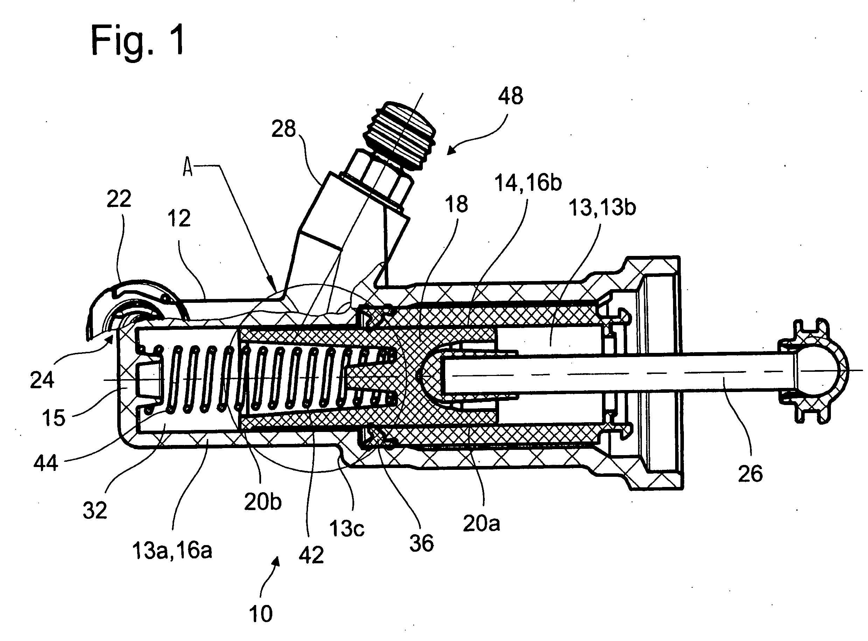

Fig.1 zeigt eine Axialschnittdarstellung eines erfindungsgemäßen Hydraulikzylinders 10, welcher als Nehmerzylinder für eine hydraulische Betätigungseinrichtung zur Betätigung einer Kraftfahrzeugkupplung ausgebildet ist. Der Nehmerzylinder 10 weist ein einseitig geschlossenes Kunststoff-Gehäuse 12 mit einer Stufenbohrung 13 auf, welche in einen an einen Gehäuseboden 15 angrenzenden Vorderabschnitt 13a und einen dazu mit einem erweiterten Durchmesser ausgeführten Hinterabschnitt 13b unterteilt ist. In dem Hinterabschnitt 13b ist ein fest mit dem Gehäuse 12 verbundenes und zu diesem zugehöriges Führungsrohr 14 eingesetzt. Der Vorderabschnitt 13a und das Führungsrohr 14 bilden, wie nachstehend noch im Detail erläutert, je eine Laufbuchse 16a, b für einen in dem Zylinder 10 axial beweglichen Kunststoff-Kolben 18 aus.

Der Kolben 18 und die Innenwandung des Zylindergehäuses 12, insbesondere der Vorderabschnitt 13a der Stufenbohrung, definieren einen variablen Druckraum 32, welcher gegenüber dem beweglichen Kolben 18 gegen die Umgebung abgedichtet ist. Dazu ist am Gehäuse 12, genauer an dem Absatz 13c der Stufenbohrung 13 eine Dichtung 36, insbesondere eine Ringlippendichtungen 36, angeordnet, die mit einer äußeren Dichtlippe am Gehäuse 12 und mit einer inneren Dichtlippe an einer ersten Lauffläche 20a des Kolbens 18 anliegt. Die Dichtung 36 ist somit axial zwischen den Laufbuchsen 16a, b angeordnet und unterteilt diese in einen innerhalb des Druckraums 32 angeordneten inneren Laufbuchsenabschnitt 16a und in einen außerhalb des Druckraums 32 angeordneten äußeren Laufbuchsenabschnitt 16b.

Zusätzlich zu der sich am Kolben 18 von der dem Druckraum 32 abgewandten Seite her und fast über dessen gesamte Länge erstreckende erste Lauffläche 20a ist am druckraumseitigen Endbereich des Kolbens 18 eine zweite Lauffläche 20b vorgesehen. Der innere Laufbuchsenabschnitt 16a wirkt zur Führung des Kolbens 18 mit der einen Führungsabschnitt darstellenden zweiten ringkragenförmigen Lauffläche 20b zusammen, welche gegenüber der ersten Lauffläche 20a im Durchmesser erweitert ausgebildet ist. Die erste Lauffläche 20a wirkt mit dem als äußeren Laufbuchsenabschnitt 16b ausgebildeten, außerhalb des Druckraumes 32 angeordneten Führungsrohr 14 zur Führung des Kolbens 18 zusammen.

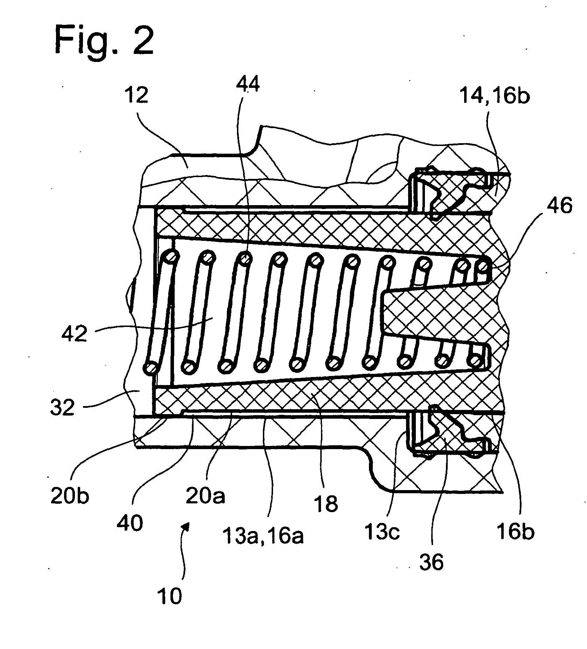

Es ist insbesondere in Fig. 2 gut erkennbar, dass der innerhalb des Druckraumes 32 ausgebildete zylindrische Wandungsbereich, d.h. der innere Laufbuchsenabschnitt 16a mit einem gegenüber dem außerhalb des Druckraumes 32 angeordneten und von dem Führungsrohr 14 gebildeten äußeren Laufbuchsenabschnitt 16b größeren Innendurchmesser ausgeführt ist. Dadurch wird innerhalb des Druckraumes 32 radial zwischen der ersten Lauffläche 20a des Kolbens 18 und dem inneren Laufbuchsenabschnitt 16a ein Ringraum 40 geschaffen. In diesen können zwar Fremdpartikel eintreten, jedoch ist dieser Ringraum 40 radial so bemessen, dass sich Fremdpartikel frei bewegen können und ein Reibkontakt sowie eine Beschädigung der mit der Dichtung 36 zusammenwirkenden ersten Lauffläche 20a sicher vermieden wird.

Der Kolben 18 ist so in dessen Länge dimensioniert, dass der Führungsabschnitt des Kolbens 18, d.h. die zweite Lauffläche 20b, und die am Gehäuse 12 angeordnete Dichtung 36 in einer druckraummaximierten Endstellung des Kolbens 18 einen axialen Zwischenraum ausbilden.

An dem Kolben 18 ist an der zu dem Druckraum 32 weisenden Kolbenfläche ein Ringraum 42 zur Aufnahme einer Druckfeder 44 angeformt, die sich mit einem Ende an dem Boden 15 des Innenzylinders 12 abstützt und sich dort an einem Ringfortsatz 44 zentrieren kann. Das gegenüberliegende Ende der Druckfeder 44 stützt sich an einer schmalen Ringfläche 46 des sich mit zunehmender Tiefe verjüngenden Ringraums 40 ab.

Der Kolben 18 des Nehmerzylinders 10 ist über eine schwenkbeweglich an diesem angeordnete Kolbenstange 26 mit einem nicht dargestellten Kupplungshebel oder einer Kupplungsgabel verbunden.

Das Gehäuse 12 umfasst weiterhin an der Stirnseite einen Fluidanschluss 22 mit einem darin ausgebildeten Fluidkanal 24, der über eine dort anschließbare Fluidleitung mit einem zeichnerisch nicht dargestellten Geberzylinder in Fluidverbindung gebracht werden kann und welcher in bekannter Weise mit einem Kupplungspedal in Verbindung steht, so dass eine über das Kupplungspedal eingeleitete Betätigungskraft auf ein Ausrückorgan einer Reibungskupplung übertragen werden kann und dadurch ein Ausrücken der Fahrzeugkupplung bewirkt wird.

Von der Mantelfläche des Gehäuses 12 steht ferner seitlich ein Anschluss 28 mit einem in den Druckraum 32 mündendem Stichkanal einer Entlüftungseinrichtung 48 ab, über welche das hydraulische System entlüftet werden kann.

## Patentansprüche

1. Hydraulikzylinder (10) für eine hydraulische Betätigungseinrichtung an Kraftfahrzeugen, umfassend
- ein Zylindergehäuse (12),
- eine Laufbuchse, die innerhalb des Zylindergehäuses (12) angeordnet ist,
- einen Kolben (18) mit einer ersten Lauffläche (20a), welcher in der Laufbuchse längsverschieblich geführt ist und der einen variablen Druckraum (32) begrenzt und
- eine im Gehäuse (12) angeordnete Dichtung (36), die zur Abdichtung des Druckraumes (32) mit der ersten Lauffläche (20a) des Kolbens (18) zusammenwirkt,
**dadurch gekennzeichnet,**
**dass** ein innerhalb des Druckraumes (32) am Gehäuse (12) ausgebildeter zylindrischer Wandungsbereich (13a) mit einem gegenüber einem außerhalb des Druckraumes (32) angeordneten äußeren Laufbuchsenabschnitt (16b) der Laufbuchse größeren Innendurchmesser ausgeführt ist.

2. Hydraulikzylinder nach Anspruch 1,
**dadurch gekennzeichnet,**
**dass** der Kolben (18) eine zweite Lauffläche (20b) als Führungsabschnitt aufweist, der mit einem im Druckraum (32) gehäusefest ausgebildeten Führungsmittel zusammenwirkt.

3. Hydraulikzylinder nach Anspruch 2,
**dadurch gekennzeichnet,**
**dass** die zweite Lauffläche (20b) des Kolbens (18) gegenüber der ersten Lauffläche (20a) radial erweitert ausgebildet ist und dass der zylindrische Wandungsbereich (13a) als ein im Druckraum (32) befindlicher innerer Laufbuchsenabschnitt (16a) zum Zusammenwirken mit der zweiten Lauffläche (20b) ausgebildet ist.

4. Hydraulikzylinder nach Anspruch 2 oder 3,
**dadurch gekennzeichnet,**
**dass** die zweite Lauffläche (20b) an dem, dem Druckraum (32) zugewandten Endbereich des Kolbens (18) ausgebildet ist.

5. Hydraulikzylinder nach einem der Ansprüche 2 - 4,
**dadurch gekennzeichnet,**
**dass** die zweite Lauffläche (20b) des Kolbens (18) und die Dichtung (36) in einer druckraummaximierten Endstellung des Kolbens (18) einen axialen Zwischenraum ausbilden.

## Claims

1. Hydraulic cylinder (10) for a hydraulic actuation device on motor vehicles, comprising
- a cylinder housing (12),
- a liner which is arranged inside the cylinder housing (12),
- a piston (18) with a first running surface (20a), which piston is guided longitudinally displaceably in the liner and delimits a variable pressure space (32), and
- a seal (36) which is arranged in the housing (12) and cooperates with the first running surface (20a) of the piston (18) in order to seal off the pressure space (32),
**characterized**
**in that** a cylindrical wall region (13a) formed inside the pressure space (32) on the housing (12) is designed with an inside diameter larger with respect to an outer liner portion (16b), arranged outside the pressure space (32), of the liner.

2. Hydraulic cylinder according to Claim 1, **characterized in that** the piston (18) has a second running surface (20b) as a guide portion which cooperates with a guide means formed, fixedly with respect to the housing, in the pressure space (32).

3. Hydraulic cylinder according to Claim 2, **characterized in that** the second running surface (20b) of the piston (18) is designed, widening radially with respect to the first running surface (20a), and **in that** the cylindrical wall region (13a) is designed as an inner liner portion (16a), located in the pressure space (32), for cooperation with the second running surface (20b).

4. Hydraulic cylinder according to Claim 2 or 3, **characterized in that** the second running surface (20b) is formed on that end region of the piston (18) which faces the pressure space (32).

5. Hydraulic cylinder according to one of Claims 2-4, **characterized in that** the second running surface (20b) of the piston (18) and the seal (36) form an axial interspace in an end position of the piston (18) in which the pressure space is maximized.

## Revendications

1. Vérin hydraulique (10) pour un dispositif de commande hydraulique dans des véhicules automobiles, comprenant :
- un boîtier de vérin (12),
- un manchon coulissant qui est disposé à l'intérieur du boîtier de vérin (12),
- un piston (18) avec une première surface de roulement (20a), qui est guidée de manière déplaçable longitudinalement dans le manchon coulissant et qui limite un espace de pression variable (32) et
- un joint d'étanchéité (36) disposé dans le boîtier (12), qui coopère avec la première surface de roulement (20a) du piston (18) pour réaliser l'étanchéité de l'espace de pression (32),
**caractérisé en ce**
**qu'**une région de paroi cylindrique (13a) réalisée à l'intérieur de l'espace de pression (32) sur le boîtier (12) est réalisée avec un diamètre intérieur plus grand par rapport à une portion extérieure (16b) du manchon coulissant disposée en dehors de l'espace de pression (32).

2. Vérin hydraulique selon la revendication 1,
**caractérisé en ce que**
le piston (18) présente une deuxième surface de roulement (20b) en tant que portion de guidage, qui coopère avec un moyen de guidage réalisé de manière fixe par rapport au boîtier dans l'espace de pression (32).

3. Vérin hydraulique selon la revendication 2,
**caractérisé en ce que**
la deuxième surface de roulement (20b) du piston (18) est réalisée de manière élargie radialement par rapport à la première surface de roulement (20a) et **en ce que** la région de paroi cylindrique (13a) est réalisée sous forme de portion de manchon coulissant intérieure (16a) se trouvant dans l'espace de pression (32) pour coopérer avec la deuxième surface de roulement (20b).

4. Vérin hydraulique selon la revendication 2 ou 3,
**caractérisé en ce que**
la deuxième surface de roulement (20b) est réalisée au niveau de la région d'extrémité du piston (18) tournée vers l'espace de pression (32).

5. Vérin hydraulique selon l'une quelconque des revendications 2 à 4,
**caractérisé en ce que**
la deuxième surface de roulement (20b) du piston (18) et le joint d'étanchéité (36) constituent dans une position d'extrémité du piston (18) maximisant l'espace de pression, un espace intermédiaire axial.
